# EUROPEAN PATENT APPLICATION

(11) **EP 3 782 469 A1**
(43) Date of publication of application: **24.02.2021**
(21) Application number: 19785141.3
(22) Date of filing: 10.04.2019
(51) Int. Cl.: A01N 63/02, A01G 7/00, A01G 7/06, A01N 25/00, A01P 3/00

(54) **METHOD OF CONTROLLING SOIL-BORNE DISEASES OF PLANTS**

(30) Priority: 10.04.2018 JP 2018075331
(71) Applicant: NATIONAL AGRICULTURE AND FOOD RESEARCH ORGANIZATION, Tsukuba-shi, Ibaraki 305-8517 (JP)
(72) Inventor: TAKEUCHI, Kasumi, Tsukuba-shi, Ibaraki 305-8634 (JP); SEO, Shigemi, Tsukuba-shi, Ibaraki 305-8634 (JP)
(74) Representative: Gassner, Birgitta
(86) International application number: PCT/JP2019/015543
(87) International publication number: WO 2019/198735

(57) **Abstract**

An object of the present invention is to provide a method, composition and kit for effectively protecting plants from soil-borne diseases in a system utilizing a microorganism.

The present invention provides a method of controlling soil-borne diseases of plants, the method comprising a step of applying a *Pseudomonas* bacterium and glutamic acid to a soil or a plant. This invention also provides a composition for controlling soil-borne diseases, and a kit for controlling soil-borne diseases, the composition and kit which comprise a *Pseudomonas* bacterium and glutamic acid.

## Description

### TECHNICAL FIELD

The present invention relates to a method of controlling soil-borne diseases of plants. More specifically, this invention relates to a method of controlling soil-borne diseases of plants using a *Pseudomonas* bacterium and glutamic acid, as well as to a composition and a kit that can be used in said method.

### BACKGROUND ART

Chemical pesticides such as bactericides, fungicides and insecticides are widely and commonly used for the purpose of protecting plants from diseases and pests. Although chemical pesticides have high ability to protect plants, they impose a heavy burden on the environment, and pesticide residues or exposure may adversely affect plants and human health.

With the aim of solving such concerns about chemical pesticides, bacteria capable of protecting plants from diseases (plant-protecting bacteria) have in recent years been used as biopesticides. For example, some strains of *Pseudomonas* bacteria are actually used as microbial pesticides, and specific examples of such microbial pesticide products include "Serunae-Genki" (Taki Chemical Co., Ltd.; PTL 1) and "VegiKeeper® Wettable Powder" (Central Glass Co., Ltd.).

Plant disease control techniques using biopesticides are advantageous in many ways, such as low environmental burden, but have many disadvantages inherent to biological materials. For example, because of utilizing biological functions, biopesticides do not exhibit their effects in a sustained manner and are hard to handle as agricultural pesticides, as compared to chemical pesticides. Therefore, there is a need to further improve biopesticides while gaining a better understanding of the biology and phenotype of microorganisms to be used as pesticides.

Under such circumstances, research and development on biopesticides have been made separately from those on chemical pesticides, and there are likely to be only a limited number of plant protection techniques using a combination of biopesticides and chemical pesticides. To cite an example of combined use of microorganisms and chemicals, there has hitherto been a report of a soil-borne disease control method using the following three components: an effective microorganism such as *Fusarium oxysporum,* a plant disease resistance inducer such as probenazole, and a soil pH modifier such as lime (PTL 2).

### CITATION LIST

### PATENT LITERATURES

PTL 1: Japanese Patent No. JP 4079209
PTL 2: Japanese Patent No. JP 6183851

### SUMMARY OF INVENTION

### TECHNICAL PROBLEM

As described above, biopesticides are advantageous in various ways, such as low environmental burden, but have disadvantages because, for example, they do not sustain their effects for a long time as compared to chemical pesticides. Thus, an object of the present invention is to provide a method, composition and kit for effectively protecting plants from soil-borne diseases in a system utilizing a microorganism.

### SOLUTION TO PROBLEM

In light of the aforementioned circumstances, the present inventors have focused *Pseudomonas* bacteria as effective microorganisms and made intensive studies in search for a substance capable of enhancing the plant protection ability of these bacteria, and as a result, surprisingly found that glutamic acid is highly effective when combined with *Pseudomonas* bacteria. On the basis of this finding, the inventors have completed the present invention.

The present invention is preferably carried out by, but not limited to, the following embodiments.
[Embodiment 1] A method of controlling a soil-borne disease of a plant, the method comprising a step of applying a *Pseudomonas* bacterium and glutamic acid to a soil or a plant.
[Embodiment 2] The method as set forth in Embodiment 1, wherein the plant is a seed or a seedling.
[Embodiment 3] The method as set forth in Embodiment 1 or 2, wherein the plant is a germinated seed.
[Embodiment 4] The method as set forth in any one of Embodiments 1 to 3, wherein the application of the *Pseudomonas* bacterium and glutamic acid is carried out before or within 3 days after seeding the plant.
[Embodiment 5] The method as set forth in any one of Embodiments 1 to 4, wherein either one of the *Pseudomonas* bacterium and glutamic acid is applied initially and then the other is applied within 3 days after the initial application.
[Embodiment 6] The method as set forth in any one of Embodiments 1 to 5, wherein the *Pseudomonas* bacterium is applied initially and then glutamic acid is applied subsequently.
[Embodiment 7] The method as set forth in any one of Embodiments 1 to 6, further comprising, after the step of applying the *Pseudomonas* bacterium and glutamic acid, a step of further adding glutamic acid.
[Embodiment 8] A composition for controlling a soil-borne disease of a plant, the composition comprising a *Pseudomonas* bacterium and glutamic acid.
[Embodiment 9] A kit for controlling a soil-borne disease of a plant, the kit comprising a *Pseudomonas* bacterium and glutamic acid.

### ADVANTAGEOUS EFFECTS OF INVENTION

By utilizing the present invention, plants can be effectively protected from soil-borne diseases. The *Pseudomonas* bacteria used in this invention have a long history of being used as biopesticides, and glutamic acid is one of naturally occurring amino acids. Therefore, the techniques provided by this invention are considered highly safe for common use of chemical pesticides. Further, since in this invention, plant protection effect is exhibited with the use of just a total of two components consisting of one type of bacterium and one type of chemical substance, the techniques of this invention are highly easy to use.

### BRIEF DESCRIPTION OF DRAWINGS

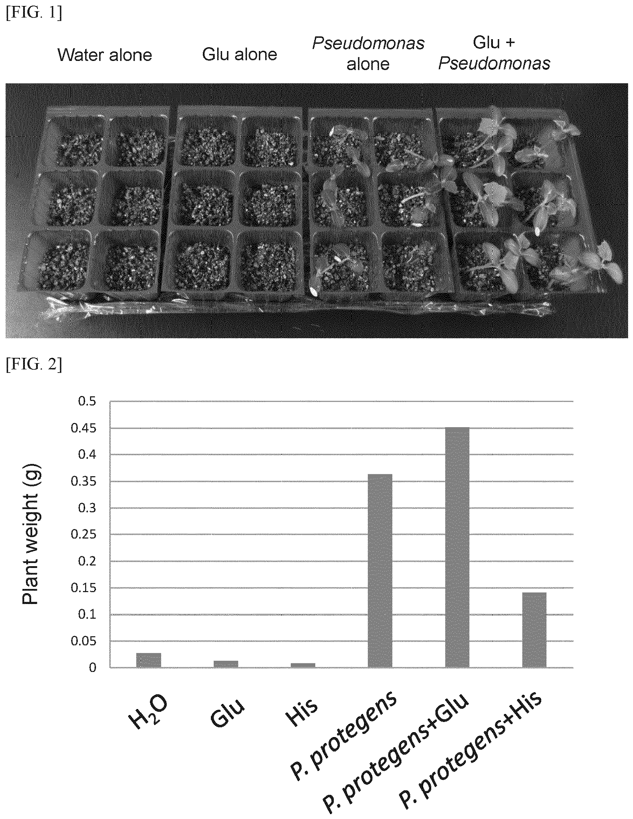

FIG. 1 illustrates a photograph that shows the disease control effect of combined use of a *Pseudomonas* bacterium and glutamic acid against a *Pythium* oomycete as a pathogenic microorganism. This photograph shows, from the left, the group treated with water, the group treated with glutamic acid alone, the group treated with a *Pseudomonas* bacterium alone, and the group treated with both glutamic acid and a *Pseudomonas* bacterium. FIG. 2 illustrates a plot that shows the results of investigating the effectiveness of combined use of each of glutamic acid (Glu) and histidine (His) with a *Pseudomonas* bacterium.

FIG. 3 illustrates a plot that shows the results of investigating the effectiveness of combined use of each of different amino acids with a *Pseudomonas* bacterium.

FIG. 4 illustrates a plot that shows the effect of combined use of glutamic acid with *Pseudomonas* sp. strain Os17 used as a *Pseudomonas* bacterium.

FIG. 5 illustrates a plot that shows the disease control effect of combined use of a *Pseudomonas* bacterium and glutamic acid against a *Rhizoctonia* fungus as a pathogenic microorganism.

### DESCRIPTION OF EMBODIMENTS

Hereunder, the present invention will be described in detail, but the scope of this invention is not limited to the descriptions provided below. Unless otherwise defined herein, the scientific and technical terminologies used in connection with this invention have meanings commonly understood among those skilled in the art.

### (1) Method of controlling soil-borne diseases of plants

One embodiment of the present invention is a method of controlling a soil-borne disease of a plant, the method comprising a step of applying a *Pseudomonas* bacterium and glutamic acid to a soil or a plant.

*Pseudomonas* bacteria belong to the family *Pseudomonadaceae,* class *Gammaproteobacteria,* phylum *Proteobacteria,* and are characterized by being Gram-negative bacilli. It is known that *Pseudomonas* bacteria inhabit a wide variety of habitats, including soil, fresh water, seawater, plants and animals.

The *Pseudomonas* bacterium used in the present invention is not particularly limited, and those bacteria having plant protection ability are preferably used. Specific examples thereof include, but are not limited to, *Pseudomonas protegens, Pseudomonas fluorescens, Pseudomonas syringae, Pseudomonas chlororaphis, Pseudomonas synxantha, Pseudomonas brassicacearum, Pseudomonas putida,* and *Pseudomonas rhodesiae.* In this invention, use may be made of *Pseudomonas* sp. strain Os17, and *Pseudomonas* sp. strain St29, which have been deposited with the National Institute of Technology and Evaluation (NITE), Patent Microorganisms Depositary (NPMD) (2-5-8 Kazusakamatari, Kisarazu-city, Chiba, Japan) under the accession numbers NITE P-02053 (deposit date: May 20, 2015) and NITE P-02054 (deposit date: May 20, 2015). Preferably, *Pseudomonas protegens, Pseudomonas* sp. strain Os17, and *Pseudomonas* sp. strain St29 are used in this invention. Among *Pseudomonas protegens* strains, *Pseudomonas protegens* strain CHAO and *Pseudomonas protegens* strain Cab57 are preferably, but not exclusively, used.

The source from which the *Pseudomonas* bacterium is obtained is not particularly limited. A personally isolated *Pseudomonas* bacterium strain, a *Pseudomonas* bacterium strain transferred from a facility, or a *Pseudomonas* bacterium strain commercially available as a biopesticide product in the market *(i.e.,* commercial product) can be used.

Glutamic acid is one of amino acids that is represented by the chemical formula: HOOC(CH₂)₂CH(NH₂)COOH (or C₅H₉NO₄). This amino acid is classified as a hydrophilic amino acid, a polar amino acid, a polar charged amino acid (polar, negatively charged amino acid), or an acidic amino acid, and may also be abbreviated as Glu or E. Glutamic acid can be found in plants and animals. To be specific, it is known to be present in, for example, sea algae, wheat flour, soybean, and sugar cane.

In the present invention, the form of glutamic acid is not particularly limited, and any of a D-form (D-glutamic acid), an L-form (L-glutamic acid), and a DL-form (DL-glutamic acid) can be used. In this invention, an L-form of glutamic acid (L-glutamic acid) is preferred. D-glutamic acid has CAS number 6893-26-1, and L-glutamic acid has CAS number 56-86-0.

In the present invention, glutamic acid may be in the form of a salt. Examples of salts of glutamic acid include, but are not limited to, alkali metal salts, e.g., sodium and potassium, of glutamic acid (*i.e.,* sodium glutamate, potassium glutamate, etc.), alkali earth metal salts, *e.g*., calcium and magnesium, of glutamic acid (*i.e.,* calcium glutamate, magnesium glutamate, etc.), zinc glutamate, and ferrous glutamate.

The procedure used to obtain glutamic acid is not particularly limited. Naturally occurring glutamic acid isolated and purified from animals and plants, or synthetic glutamic acid produced by chemical synthesis or fermentation can be used. The source from which glutamic acid is obtained is not particularly limited. Personally purified glutamic acid or a commercial glutamic acid product can be used. In the present invention, a commercial glutamic acid product is preferably used.

In the method of the present invention, the *Pseudomonas* bacterium and glutamic acid are applied to a soil or a plant. As referred to herein, the "soil" refers to a soil in which a plant can grow. The soil used in this invention can be a soil defined by the name of, for example, nursery soil, culture soil, seedling soil, or seedling nursery soil. A totally untreated soil from mountain and field may be used as it is. The grain size of the soil is not particularly limited, and the soil can be of any grain size as long as a plant can grow in the soil. In this invention, the soil to which to apply a *Pseudomonas* bacterium and glutamic acid is preferably a soil in the vicinity of a plant *(e.g.,* a soil within 10 cm around a plant).

In the present invention, the type of a plant is not particularly limited, but the plant is preferably an agricultural product. Examples of the agricultural product include, but are not particularly limited to, vegetables, cereals, fruits, flowers, and beans. Specific examples thereof include, but are not limited to: gourds (*e.g*., cucumber, watermelon, pumpkin, courgette, calabash, luffa, winter melon, squirting cucumber, bottle gourd, bitter melon, melon); tubers (*e.g.*, potato, sweet potato, taro, Chinese yam, Japanese yam); root vegetables (*e.g*., turnip, Japanese radish, radish, Japanese horseradish, horseradish, burdock, Chinese artichoke, ginger, carrot, Chinese onion, lotus root, lily bulb); leaf vegetables (*e.g*., Chinese mustard, cabbage, watercress, kale, Japanese mustard spinach, choy sum, stem lettuce, Shantung vegetable, crown daisy, Shirona (*Brassica rapa* var. *pekinensis*), cicely, celery, spinach mustard, Asian herb bennet, leaf mustard, Chinese cabbage, leek, turnip rape, nozawana, napa cabbage, parsley, Japanese hybrid mustard spinach Haruna, Swiss chard, spinach, potherb mustard Mizuna, potherb mustard Mibuna, Japanese honeywort, Brussels sprout, arugula, lettuce, hanakkori (*Brassica napus* cv. *hanakkori*), wasabina mustard); fruit vegetables (*e.g.*, eggplant, melon pear, tomato (*e.g.*, cherry tomato, high sugar tomato), tamarillo, *Gamblea innovans,* chili pepper, sweet pepper, habanero pepper, bell pepper (including paprika and ripe colored bell pepper), pumpkin, courgette, cucumber, horned melon, oriental pickling melon, bitter melon, winter melon, luffa, bottle gourd, lady's finger); cereals (*e.g.*, corn); beans (*e.g*., adzuki bean, common bean, pea, green soy bean, black-eyed pea, winged bean, broad bean, soybean, sword bean, peanut, lentil, sesame); and mushrooms (*e.g*., winter mushroom, king oyster mushroom, Jew's Ear fungus, long net stinkhorn, shiitake mushroom, shimeji mushroom, snow fungus, golden oyster mushroom, tawny milkcap mushroom, butterscotch mushroom, honey mushroom, fried chicken mushroom, oyster mushroom, buna shimeji mushroom, Bunapi-shimeji mushroom, yellow boletus, brown clamshell mushroom, hen-of-the-woods, white mushroom, pine mushroom, lion's mane mushroom).

In the present invention, the state of the plant to which to apply a *Pseudomonas* bacterium and glutamic acid is not particularly limited. The plant can be in a seed or seedling state, or in a grown-up state, but the plant is preferably in a seed or seedling state, more preferably in a seed state. By applying a *Pseudomonas* bacterium and glutamic acid to a plant at an early growth stage, such as seed or seedling stage, the onset of a soil-borne disease can be reduced, so that the soil-borne disease of the plant can be controlled more effectively. Further, when the tissue of a plant is immature, the *Pseudomonas* bacterium and glutamic acid can penetrate the plant more easily, so that the soil-borne disease of the plant can be controlled more effectively. From the viewpoint of soil-borne disease control, it is particularly preferred in this invention that the plant should be a germinated seed. When the plant is in a grown-up state, the *Pseudomonas* bacterium and glutamic acid can be applied to any parts of the plant, such as root, leaf, stem, branch or trunk.

The procedure and means used to apply the *Pseudomonas* bacterium and glutamic acid to a soil or a plant are not particularly limited as long as the effects of the present invention are exhibited when said procedure and means are used. For example, the application procedure can be carried out by preparing water(s) (an aqueous solution(s)) in which the *Pseudomonas* bacterium and glutamic acid are both or each separately suspended or dissolved, and bringing the prepared water(s) (aqueous solution(s)) into contact with a soil or a plant.

The *Pseudomonas* bacterium and glutamic acid can be in a liquid or solid form. When the *Pseudomonas* bacterium and glutamic acid are in a liquid form, they can be applied to a soil or a plant by spraying, dropwise addition, immersion, or other similar procedure. When application is done by immersion, the immersion procedure can be carried out by providing a separate container(s), putting the prepared liquid(s) in the container(s), and dipping a cultivation container with a drainage hole(s) containing a soil or a plant into the container(s). When the *Pseudomonas* bacterium and glutamic acid are in a solid form, they can be applied by placing the solids on or into a soil or by bringing the solids into contact with a surface of a plant.

The amounts of the *Pseudomonas* bacterium and glutamic acid to be applied to a soil or a plant are not particularly limited, and can be determined as appropriate depending on, for example, the forms of the *Pseudomonas* bacterium and glutamic acid to be applied, and the type of a plant to which the *Pseudomonas* bacterium and glutamic acid are applied. For example, in the case of application of the *Pseudomonas* bacterium to a soil, the bacterium can be applied to the soil at a microbial count of 10⁴ to 10²⁰ CFU, preferably 10⁶ to 10¹⁰ CFU, per cm³ of soil per dose. In the case of application of glutamic acid to a soil, glutamic acid can be applied to the soil in an amount of 0.01 mM to 1 M, preferably 0.1 mM to 100 mM, per cm³ of soil per dose. The amounts of the *Pseudomonas* bacterium and glutamic acid to be added can be adjusted in consideration of the concentrations of these components present in a formulation and the amount of the formulation to be added. Further, in the case of application of the *Pseudomonas* bacterium to a plant, the bacterium can be applied to the plant at a microbial count of 10⁴ to 10²⁰ CFU, preferably 10⁶ to 10¹⁰ CFU, per plant individual per dose. In the case of application of glutamic acid to a plant, glutamic acid can be applied to the plant in an amount of 0.01 mM to 1 M, preferably 0.1 mM to 100 mM, per plant individual per dose. The amounts of the *Pseudomonas* bacterium and glutamic acid to be added can be adjusted in consideration of the concentrations of these components present in a formulation and the amount of the formulation to be added. When glutamic acid is a salt thereof, the amount of glutamic acid can be calculated based on the molecular weight of its free form (glutamate ion).

The timing of applying the *Pseudomonas* bacterium and glutamic acid is not particularly limited. The application can be carried out before, during and after seeding a plant (including seedling period, setting period, etc.), but is preferably carried out before or within 3 days after seeding the plant. As referred to herein, the term "seeding" refers to planting a plant into a soil as a starting point for plant growth, and includes, for example, sowing seeds into a soil and planting seedlings into a soil.

In the case of application of the *Pseudomonas* bacterium and glutamic acid before seeding a plant, the specific timing of the application is not particularly limited, and is, for example, within 7 days, 6 days, 5 days, 4 days, 3 days, 2 days, 1 day, 12 hours, 6 hours, 3 hours, 1 hour, 30 minutes, 10 minutes, 5 minutes, 1 minute, or 30 seconds before seeding. In the case of application of the *Pseudomonas* bacterium and glutamic acid after seeding a plant, the specific timing of the application can be within 7 days, 6 days, 5 days, or 4 days after seeding, or within 2 days, 1 day, 12 hours, 6 hours, 3 hours, 1 hour, 30 minutes, 10 minutes, 5 minutes, 1 minute, or 30 seconds after seeding. The typical timing of the application is within 7 days before or after seeding. In the present invention, it is preferred that the *Pseudomonas* bacterium and glutamic acid should be brought into contact with a plant at an early stage of plant growth. From this viewpoint, the interval between the aforementioned application timing and plant seeding timing is preferably as short as possible. For example, application is preferably done at least within 3 days before or after seeding, or at least within 1 day before or after seeding.

In the method of the present invention, the *Pseudomonas* bacterium and glutamic acid may be applied simultaneously or separately. In the method of this invention, it is acceptable, but not particularly required, that one of the *Pseudomonas* bacterium and glutamic acid may be applied initially and then the other may be applied within 3 days after the initial application. The interval between the initial and subsequent application timings may be within 2 days, 1 day, 12 hours, 6 hours, 3 hours, 1 hour, 30 minutes, 10 minutes, 5 minutes, 1 minute, or 30 seconds. Since glutamic acid is considered to act to dramatically enhance the soil-borne disease control ability of *Pseudomonas* bacteria, it is preferred in this invention that the interval between the initial and subsequent application timings should rather be not long. From this viewpoint, it is preferred that the interval between the timings of applying each of the *Pseudomonas* bacterium and glutamic acid should be at least within 1 day. Additionally, the aforementioned timing of applying the *Pseudomonas* bacterium and glutamic acid relative to the timing of seeding a plant may be regarded as a timing of applying one of the *Pseudomonas* bacterium and glutamic acid, and in such a case, the other may be applied within 3 days after the initial application.

Either one of the *Pseudomonas* bacterium and glutamic acid may be applied initially. In other words, the *Pseudomonas* bacterium may be applied initially and then glutamic acid may be applied subsequently. Alternatively, glutamic acid may be applied initially and then the *Pseudomonas* bacterium may be applied subsequently. In the present invention, it is preferable, but not particularly required, that the *Pseudomonas* bacterium should be applied initially and then glutamic acid should be applied subsequently. It is considered that by applying the *Pseudomonas* bacterium initially, the adhesion of the *Pseudomonas* bacterium onto a surface of a plant *(e.g.,* seeds) can be enhanced, so that the plant can be protected more effectively against a soil-borne disease.

The method of the present invention may further comprise, after the step of applying the *Pseudomonas* bacterium and glutamic acid, a step of further adding glutamic acid. It is expected that by further adding glutamic acid, the soil-borne disease control ability of *Pseudomonas* bacteria can be enhanced in a sustained manner, so that control of soil-borne diseases can be achieved more effectively. Further addition of glutamic acid can be done at least once, at least twice, at least 3 times, at least 4 times, or at least 5 times. Further addition of glutamic acid is typically done once to 20 times, preferably twice to 10 times, more preferably 3 to 8 times.

Further addition of glutamic acid may be repeated continuously. The intervals at which further addition of glutamic acid is repeated are not particularly limited. For example, said intervals can be at least 6 hours apart, at least 12 hours apart, at least 1 day apart, at least 2 days apart, at least 3 days apart, or at least 4 days apart, and also can be at most 10 days apart, at most 7 days apart, at most 6 days apart, at most 5 days apart, at most 4 days apart, at most 3 days apart, at most 2 days apart, at most 1 day apart, or at most 12 hours apart. The intervals at which further addition of glutamic acid is repeated are typically 6 hours to 10 days apart, preferably 12 hours to 7 days apart, more preferably 1 to 3 days apart.

The form and means for further adding glutamic acid are not particularly limited, and can be as described above. Also, the amount of glutamic acid to be added is not particularly limited, and can be as described above.

The type of a soil-borne disease to be controlled in the present invention is not particularly limited as long as it is a disease caused by a pathogenic microorganism living in a soil. Examples of pathogenic microorganisms living in a soil include filamentous fungi (*e.g.*, eumycetes, oomycetes). Specific examples of filamentous fungi as pathogenic microorganisms include, but are not limited to, fungi in the genus *Pythium* (*e.g., Pythium ultimum, Pythium* *aphanidermatum, Pythium megalacanthum*), fungi in the genus *Fusarium* (*e.g.*, *Fusarium oxysporum, Fusarium graminearum, Fusarium solani*), fungi in the genus *Rhizoctonia* (*e.g.*, *Rhizoctonia solani*), and fungi in the genus *Thielaviopsis.* Specific examples of other pathogenic microorganisms than filamentous fungi include, but are not limited to, bacteria in the genus *Erwinia* (*e.g., Erwinia carotovora*), bacteria in the genus *Ralstonia (e.g., Ralstonia solanacearum*), bacteria in the genus *Pectobacterium* (*e.g., Pectobacterium carotovorum*), bacteria in the genus *Burkholderia* (*e.g.*, *Burkholderia glumae*), and bacteria in the genus *Agrobacterium* (*e.g*., *Agrobacterium tumefaciens*). The pathogenic microorganism to be controlled in the present invention is preferably a filamentous fungus.

Examples of soil-borne diseases include, but are not limited to, seedling blight diseases, *Pythium* rot diseases, transplanted seedling root rot diseases, wilt diseases, leaf rot diseases, root rot diseases, dead-arm diseases, damping-off diseases, yellows diseases, bottom rot diseases, root rot decline diseases, cone browning diseases, rot diseases, leaf blotch diseases, dry rot diseases, foot blight diseases, red-mold diseases, bulb rot diseases, stem rot wilt diseases, stem rot disease, root rot wilt diseases, black vascular fruit rot diseases, half blight diseases, black blotted root rot diseases, Panama diseases, brown rot diseases, *Fusarium* diseases, foot rot diseases, sheath blight diseases, bud blight diseases, web blight diseases, brown sheath blight diseases, bottom blight diseases, *Rhizoctonia* diseases, corm rot diseases, black scurf diseases, shot-hole and leaf blight diseases, dry root rot diseases, large cottony rot diseases, rind-oil spot diseases, crown root rot diseases, fruit rot diseases, foot rot diseases, forest root rot diseases, bottom rot diseases, pod rot diseases, bulb-coat rot diseases, brown scurf diseases, root rot diseases, brown spot diseases, white leaf rot diseases, *Rhizoctonia* sheath rot diseases, *Rhizoctonia* root rot diseases, and hydroponics root rot diseases.

### (2) Composition for controlling soil-borne diseases of plants

One embodiment of the present invention is a composition for controlling a soil-borne disease of a plant, the composition comprising a *Pseudomonas* bacterium and glutamic acid.

The *Pseudomonas* bacterium and glutamic acid used in the composition of the present invention are as described above.

The amount of a *Pseudomonas* bacterium present in the composition of the present invention can be determined as appropriate depending on, for example, the species and properties (*e.g*., drought resistance) of the bacterium, the type of a plant to which to apply the composition, and the type of dosage form. The amount of a *Pseudomonas* bacterium present in the composition of the present invention is not particularly limited, and is, for example, from 10⁴ to 10²⁰ CFU, preferably from 10⁶ to 10¹² CFU, per 100 g of the composition.

The procedure for incorporating a *Pseudomonas* bacterium in the composition of the present invention is not particularly limited -- the *Pseudomonas* bacterium may be incorporated as it is. For example, a *Pseudomonas* bacterium is cultured by a procedure known to those skilled in the art, and then a bacterium is harvested by centrifugation, etc. from a liquid culture medium or harvested with a platinum loop, etc. from a solid culture medium, whereupon the harvested bacterium can be incorporated in the composition of this invention. Alternatively, a *Pseudomonas* bacterium stored in a liquid is freeze dried by a *per se* known procedure, whereupon the *Pseudomonas* bacterium obtained as a solid substance can be incorporated in the composition of this invention.

The amount of glutamic acid present in the composition of the present invention can be determined as appropriate depending on, for example, the type of a plant to which to apply the composition, and the type of dosage form. The amount of glutamic acid present in the composition of this invention is not particularly limited, and is, for example, from 0.01 mM to 1 M, preferably from 0.1 mM to 100 mM, per 100 g of the composition.

The composition of the present invention may contain various additives, including excipient, thickener, binder, stabilizer, preservative, pH adjustor, colorant, and flavoring agent. The types of additives to be added are not particularly limited, and any materials known in the field of biopesticides can be used. The amounts of additives to be added can be adjusted as appropriate based on techniques known to those skilled in the art. Further, the composition of this invention can be in any form, such as liquid, solid, gel or paste, and the form of the composition can be determined as appropriate depending on the conditions for use and the like.

The composition of the present invention may be in a concentrated form. The factor of concentration of such a concentrated form of composition is not particularly limited, and can be, for example, from 2 to 1000-fold, from 5 to 100-fold, or from 10 to 50-fold. When the composition of this invention is provided in a concentrated form, the composition can be diluted as appropriate with a solvent such as water and then the dilution can be applied to a soil or a plant. The amounts of a *Pseudomonas* bacterium and glutamic acid present in such a concentrated form of composition can be determined depending on the concentration factor.

The composition of the present invention may be composed of a single formulation comprising a *Pseudomonas* bacterium and glutamic acid, or of two separate formulations each comprising either a *Pseudomonas* bacterium or glutamic acid. When the composition of this invention is composed of two separate formulations, it is preferred that these two formulations should be used in combination *(i.e.,* should be combined agents). Also, when the composition of this invention is composed of two separate formulations, these two formulations can be in different dosage forms or in the same dosage form.

The composition of the present invention is used for the purpose of controlling soil-borne diseases of plants. The types of plants and soil-borne diseases to which to apply the inventive composition are not particularly limited. Specific examples of plants and soil-borne diseases are as mentioned above. The composition of this invention can also be used as a biopesticide or microbial pesticide. Therefore, the composition of this invention can also be described as a pesticide composition.

### (3) Kit for controlling soil-borne diseases of plants

One embodiment of the present invention is a kit for controlling a soil-borne disease of a plant, the kit comprising a *Pseudomonas* bacterium and glutamic acid.

The *Pseudomonas* bacterium and glutamic acid used in the kit of the present invention are as described above.

In the kit of the present invention, the *Pseudomonas* bacterium and glutamic acid can be in the form of reagents or preparations -- the forms of the *Pseudomonas* bacterium and glutamic acid are not particularly limited. Also, the *Pseudomonas* bacterium and glutamic acid can both be contained in a single formulation, or can each be separately contained in separate formulations. When the *Pseudomonas* bacterium and glutamic acid are each separately contained in separate formulations, these formulations can be in different dosage forms or in the same dosage form.

The form(s) of a formulation(s) used in the kit of the present invention is(are) not particularly limited, and the formulation(s) can be in any form, such as liquid, solid, gel or paste. Also, the amounts of a *Pseudomonas* bacterium and glutamic acid present in a formulation(s) are not particularly limited, and can be determined as desired in line with those amounts present in the composition of this invention as mentioned above.

A formulation used in the kit of the present invention can be packaged at a single dose in an individual single-use package, or can be packaged in a package containing multiple doses *(e.g.,* 2, 3, 4, 5, 10 or more doses). The package to be used is not particularly limited, and can be determined as appropriate depending on the volume of a formulation used and the like.

When a *Pseudomonas* bacterium and glutamic acid are separated as different reagents or formulations in the kit of the present invention, they do not necessarily have to be incorporated in one package, and they may be packaged in separate packages and combined upon use. Further, the kit of this invention may include instructions for use of a *Pseudomonas* bacterium and glutamic acid.

The kit of the present invention is used for the purpose of controlling soil-borne diseases of plants. The types of plants and soil-borne diseases to which to apply the inventive kit are not particularly limited. Specific examples of plants and soil-borne diseases are as mentioned above. The kit of this invention can also be used as a biopesticide or microbial pesticide.

### EXAMPLES

Hereunder, the present invention will be specifically described by way of examples, but these examples are not intended to limit the technical scope of this invention. Those skilled in the art may easily make modifications and alterations to this invention on the basis of the descriptions in the present disclosure. Such modifications and alterations are also included in the technical scope of this invention.

### Example 1

The disease control abilities of a *Pseudomonas* bacterium and glutamic acid against an infectious disease caused by a *Pythium (Pythium ultimum* strain MAFF425494) as a soil pathogen were investigated using cucumber as a test plant.

Cucumber seeds were placed on a filter paper moistened with sterile water and left in darkness at 26°C for 24 hours. *Pseudomonas protegens* strain CHAO was used as a *Pseudomonas* bacterium and incubated with shaking in NYB medium (nutrient broth 25 g, yeast extract 5 g, H₂O 1000 mL) under the conditions of 30°C and 180 rpm for 24 hours. The broth culture of the *Pseudomonas* bacterium was centrifuged to remove supernatants, and the precipitate was suspended in sterile water to OD₆₀₀ = 0.1.

Vermiculite was moistened by adding water. To the vermiculite, coarse cereal crops (millet) previously infected with a *Pythium* were added as they were, and mixing was done well. 7 g of the coarse cereal crops infected with a *Pythium* was added to 1 L of the vermiculite. Some portion of the vermiculite was left without adding the coarse cereal crops infected with a *Pythium.*

50 mL of each prepared vermiculite was equally divided into sections (each 5 cm square and 5 cm deep) of a seedling tray with drainage holes at the bottom for water to drain out. Two grains of cucumber seeds observed to have germinated were seeded on each divided vermiculite.

The *Pseudomonas* bacterium and glutamic acid were applied to cucumber seeds and soils in their vicinity. To be specific, for each section of the seedling tray, 4 mL of the adjusted solution of the *Pseudomonas* bacterium was applied to cucumber seeds, and 15 mL of the vermiculite left without being infected with a *Pythium* was placed over the cucumber seeds. The seedling tray was soaked in water or an aqueous solution of 10 mM glutamic acid (L-glutamic acid) (10 mL per seedling tray section) contained in a vat. The applications of the *Pseudomonas* bacterium and glutamic acid were carried out within 2 hours after the seeding of cucumber seeds. The interval between the timings of applications of the *Pseudomonas* bacterium and glutamic acid was ensured to be not exceeding 1 hour.

The seedling tray was kept in a plant incubator set at 25°C. The light and dark periods were set to 16 and 8 hours, respectively. The cultivation period in the incubator was set to 2 weeks. Replacement of water or an aqueous solution of 10 mM glutamic acid in a vat was done every other day.

The results of this example are shown in FIG. 1. As shown in the photograph in FIG. 1, it was revealed that combined use of the *Pseudomonas* bacterium and glutamic acid enhanced the soil-borne disease control ability of the *Pseudomonas* bacterium. Further, since glutamic acid itself seemed not to have a high soil-borne disease control ability, it was considered that glutamic acid acted on the *Pseudomonas* bacterium to enhance the soil-borne disease control ability of the *Pseudomonas* bacterium.

### Example 2

By using the same procedure as in Example 1, the effectiveness of combined use of the *Pseudomonas* bacterium with each of glutamic acid and histidine was investigated.

For application of histidine, an aqueous solution of 10 mM histidine (L-histidine) was prepared and used instead of the aqueous solution of glutamic acid used in Example 1. The number of cucumbers cultivated was n = 12 for each group. After 2 weeks of cultivation, the weights of cucumbers were measured and averaged. Upon measurement of the weights of cucumbers, it was ensured that the vermiculite remaining on the roots of cucumbers was washed away carefully.

The results of this example are shown in FIG. 2. In this example, the ability of controlling a soil-borne disease in the plant was quantified, and it became more evident that addition of glutamic acid to the *Pseudomonas* bacterium enhanced the disease control ability of the bacterium (a significant difference was observed by t-test). In contrast, it was suggested that histidine did not have a capability of enhancing the disease control ability of the *Pseudomonas* bacterium, but rather was likely to diminish the disease control ability.

### Example 3

The effects of combined use of a *Pseudomonas* bacterium with other amino acids than histidine were investigated. In this example, not only glutamic acid (Glu), but also the following other amino acids: glutamine (Gln), glycine (Gly), leucine (Leu), phenylalanine (Phe), arginine (Arg), lysine (Lys), valine (Val), isoleucine (Ile) and tryptophane (Trp), were evaluated by using the same procedure as in Example 1. For each of these amino acids, an aqueous solution of 10 mM amino acid was prepared and used. In this example, *Pseudomonas protegens* strain Cab57 was used as a *Pseudomonas* bacterium, and all amino acids used were of the L-form.

The number of cucumbers cultivated in this example was n = 12 to 18 for each group. As in Example 2, after 2 weeks of cultivation, the weights of cucumbers were measured and averaged. For each of the averaged values of the cucumber weights calculated for the different groups, a relative value was determined with respect to the averaged value for the group treated with the *Pseudomonas* bacterium alone, which was taken as 1.

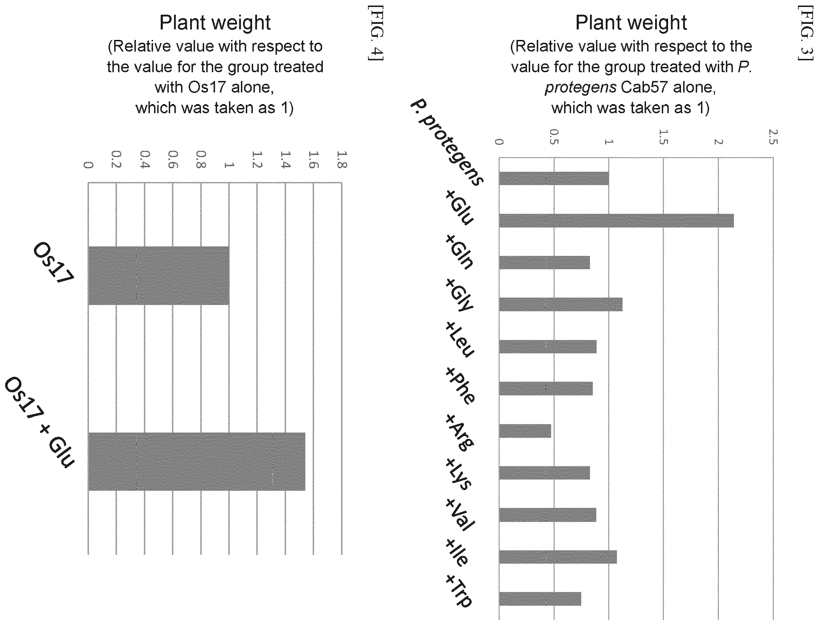

The results of this example are shown in FIG. 3. The results revealed that all the amino acids used, other than glutamic acid, were less capable of enhancing the disease control ability of the *Pseudomonas* bacterium. Also, it was demonstrated that glutamic acid exhibited a similar effect even on a different strain of *Pseudomonas* bacterium (a significant difference was observed by t-test).

### Example 4

In this example, the effect of glutamic acid on a *Pseudomonas* bacterium was nvestigated using *Pseudomonas* sp. strain Os17 as the *Pseudomonas* bacterium.

The same procedure as in Example 1 was used in this example. The number of cucumbers cultivated was n = 17 for each group. As in Example 3, after 2 weeks of cultivation, the weights of cucumbers were measured and averaged, and a relative value of the averaged value for the group treated with the *Pseudomonas* bacterium and glutamic acid was determined with respect to the averaged value for the group treated with the *Pseudomonas* bacterium alone, which was taken as 1.

The results of this example are shown in FIG. 4. The results demonstrated that glutamic acid exhibited a similar effect even when *Pseudomonas* sp. strain Os17 was used as a *Pseudomonas* bacterium (a significant difference was observed by t-test).

### Example 5

This example investigated whether combined use of a *Pseudomonas* bacterium with glutamic acid exhibited similar enhancement of soil-borne disease control potential even when a different bacterial strain was used as a pathogenic microorganism.

In this example, a *Rhizoctonia* fungus (*Rhizoctonia solani* strain MAFF726551) was used as a pathogenic microorganism. *Pseudomonas protegens* strain Cab57 was used as a *Pseudomonas* bacterium.

In this example, by using the same procedure as in Example 1, 1 g of coarse cereal crops infected with the *Rhizoctonia* was added to 1 L of vermiculite, instead of 7 g of coarse cereal crops infected with a *Pythium.* The cultivation period for cucumbers was set to 5 days. The number of cucumbers cultivated was n = 8 to 12 for each group. As in Example 3, for each of the averaged values of the cucumber weights after cultivation calculated for the different groups, a relative value was determined with respect to the averaged value for the group treated with the *Pseudomonas* bacterium alone, which was taken as 1.

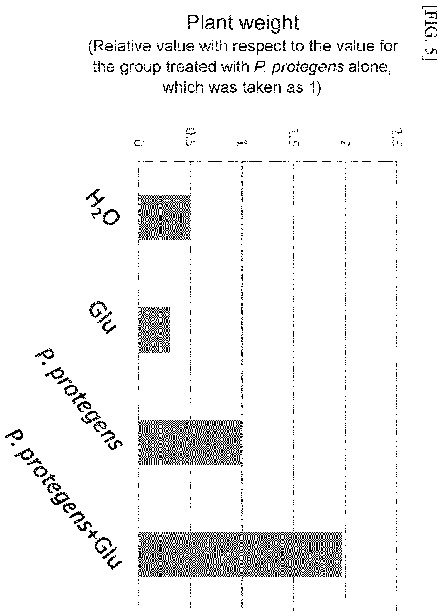

The results of this example are shown in FIG. 5. The results showed that combined use of the *Pseudomonas* bacterium with glutamic acid exhibited similar enhancement of soil-borne disease control ability even when a different phytopathogen was used as a pathogenic microorganism (a significant difference was observed by t-test).

### INDUSTRIAL APPLICABILITY

The techniques provided by the present invention are useful in agricultural fields from the viewpoint of effective protection of plants such as agricultural products against soil-borne diseases. *Pseudomonas* bacteria and glutamic acid as provided in this invention can be utilized in the field of pesticides, especially biopesticides.

## Claims

1. A method of controlling a soil-borne disease of a plant, the method comprising a step of applying a *Pseudomonas* bacterium and glutamic acid to a soil or a plant.

2. The method according to claim 1, wherein the plant is a seed or a seedling.

3. The method according to claim 1 or 2, wherein the plant is a germinated seed.

4. The method according to any one of claims 1 to 3, wherein the application of the *Pseudomonas* bacterium and glutamic acid is carried out before or within 3 days after seeding the plant.

5. The method according to any one of claims 1 to 4, wherein either one of the *Pseudomonas* bacterium and glutamic acid is applied initially and then the other is applied within 3 days after the initial application.

6. The method according to any one of claims 1 to 5, wherein the *Pseudomonas* bacterium is applied initially and then glutamic acid is applied subsequently.

7. The method according to any one of claims 1 to 6, further comprising, after the step of applying the *Pseudomonas* bacterium and glutamic acid, a step of further adding glutamic acid.

8. A composition for controlling a soil-borne disease of a plant, the composition comprising a *Pseudomonas* bacterium and glutamic acid.

9. A kit for controlling a soil-borne disease of a plant, the kit comprising a *Pseudomonas* bacterium and glutamic acid.
